# EUROPEAN PATENT SPECIFICATION

(11) **EP 0 574 210 B1**
(45) Date of publication and mention of the grant of the patent: **13.08.1997**
(21) Application number: 93304396.0
(22) Date of filing: 07.06.1993
(51) Int. Cl.: G03B 21/64

(54) **Opaque sheet with transparent windows for storing photographic slides**
Lichtundurchlässiges Blatt mit durchsichtigen Fenstern zum Aufbewahren von Diapositiven
Feuille opaque avec des fenêtres transparentes pour le rangement de diapositives

(30) Priority: 09.06.1992 JP 149446/92
(43) Date of publication of application: 15.12.1993
(73) Proprietor: SLIDEX CORPORATION, Tokyo 171 (JP)
(72) Inventor: Ozeki, Jiro, Tokyo (JP)
(74) Representative: Jackson, Peter Arthur

(56) References cited:
- EP-A- 0 338 155
- EP-A- 0 477 492
- US-A- 2 968 882
- US-A- 3 873 405
- US-A- 4 988 556

## Description

The present invention relates to a film storing sheet for storing in a side-by-side relation a plurality of image carrying films such as film slides, each comprising an image carrying film and a film mounting frame, or elongate films, each having a plurality of imaged frames arranged in a lengthwise direction. More specifically, the present invention pertains to a film storing sheet made of a transparent material for storing image carrying films so that the films can be observed through the film storing sheet.

In the Japanese utility model publication No. 35-16523 which corresponds to the U.S. patent 2,968,882, there is disclosed a film storing sheet for storing a plurality of image carrying films such as film slides which comprise films each being mounted on a film mounting frame. The film storing sheet is formed of a transparent plastic sheet and has a plurality of recessed film storing sections arranged in rows and columns. Each of the film storing sections has a transparent bottom and a peripheral portion around the bottom and raised from the plane of the bottom. The peripheral portion is provided with laterally inward projections for engagement with the mounting frame of the film slide.

The film slide is stored in the storing section with its coated surface faced to the bottom of the sheet. Thus, the coating on the film is protected by the bottom of the storing section against scratching.

This type of film storing sheet is preferable in that the images on the films can be observed with the film slides placed on the storing sheet by seeing through the sheet and the film slides placed thereon. Projectors are developed for the purpose. The projector has a light source and an opaque platen located over the light source. A film storing sheet having film slides held thereon is placed on the opaque platen so that all picture frames on the film slides held on the film storing sheet can be observed by making the light from the light source pass through the film storing sheet and the film slides. Thus, the film storing sheet of this type is convenient to observe all picture frames carried by the sheet at the same time.

It should however be noted that the film storing sheet of this type has problems in that the light which has passed through the peripheral portion of the storing section of the sheet disturbs observation of the image on the film stored in the storing section. Since the film storing sheet is made of a transparent plastic material, the light which has passed through the peripheral portion of the storing section is brighter than the light which has passed through the bottom of the storing section and the image area of the film in the film slide. Thus, due to the brightness of the light which has passed through the peripheral portion of the storing section, the visibility of the image on the film of the film slide is decreased.

It is therefore desirable to provide a film storing sheet in which the brightness of the peripheral portion of the storing section can be suppressed even when the film on the storing sheet is observed through the aforementioned type of projector.

US-A-4988556 discloses a film storing sheet made of a transparent material for storing image carrying films, the film storing sheet comprising a plurality of film storing sections arranged in a plane, each of the film storing sections having a transparent area in a position corresponding to an image area of the film to be stored in the film storing section so that images on the films stored in the film storing sections can be observed under light which has passed through the transparent areas, and the film storing sheet being opaquely coloured at peripheral portions of the film storing sections to prevent a bright light from passing through.

Other similar film storing sheets are disclosed in EP-A-0 338 155, EP-A-0 477 492 and US-A-3 873 405.

According to the present invention, such a film storing sheet is characterised in that for all transparent areas, edge portions of the opaquely coloured peripheral portions, adjacent to the respective edges of the transparent areas, have the colour fading towards the corresponding edges of said transparent areas, or have a zig-zag edge pattern.

Preferably the film storing sections are arranged in rows and columns, and the opaquely coloured peripheral portions are in a lattice-like pattern.

In one arrangement, the film storing sheet comprises a pair of transparent sheets which are laid one over the other and sealed together at three peripheral edge portions, the transparent sheets being also sealed together in intermediate portions along spaced lines which are parallel with at least one of the peripheral edge portions to define said plurality of the film storing sections, one of the transparent sheets having cuts for defining openings for insertion of the films into the storing sections, at least one of the transparent sheets being opaquely coloured at portions between the storing sections to provide the opaquely coloured peripheral portions.

Alternatively the film storing sheet may be for storing elongate films each having a plurality of image areas, the film storing sheet including a plurality of film storing sections arranged in parallel relationship. In that case the film storing sheet may comprise a pair of transparent sheets which are laid one over the other and sealed together at two opposite peripheral edge portions, the transparent sheets being also sealed together in intermediate portions along spaced lines which are parallel with the two opposite peripheral edge portions to define a plurality of film storing sections for storing said elongate films, each of the film storing sections being open at least at one end to allow the elongate film to be inserted into the storing section and at least one of the transparent sheets being opaquely coloured at portions between the storing sections to provide the opaquely coloured peripheral portions.

According to the film storing sheet of the present invention, the boundary area between adjacent film storing sections is opaquely colored so that light is prevented from passing through the boundary areas around the image areas when the film storing sheet with films thereon is placed on a projector to observe the images on the films under the light which has passed through the storing sheet. Therefore, there will be no difficulty in observing the images on the films under the light which has passed through the storing sheet.

In the accompanying drawings:-
Figure 1 is a plan view of a film storing sheet to which the invention may be applied ;
Figure 2 is a perspective view in an enlarged scale of a portion of the film storing sheet shown in Figure 1;
Figure 3 is a perspective view showing the film storing sheet shown in Figure 1 placed on a light box type projector to observe images on the films stored in the storing sheet;
Figure 4 is a plan view of another film storing sheet to which the invention may be applied ;
Figure 5 is a plan view showing a further film storing sheet to which the invention may be applied ;
Figure 6 is a plan view showing an example of the pattern of the opaque coating in accordance with the invention ; and
Figure 7 is a plan view showing a further example of the pattern of the opaque coating in accordance with the invention.

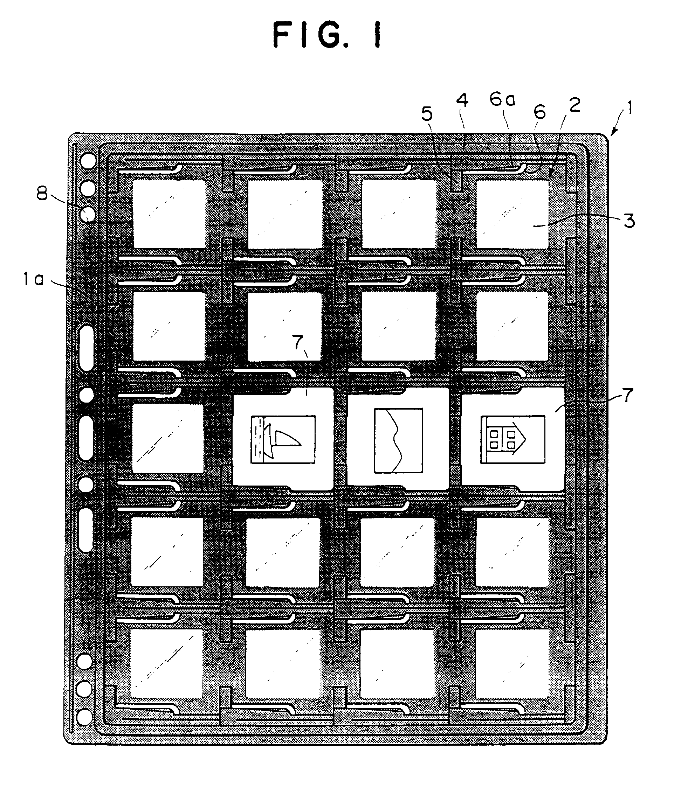

Referring to the drawings, particularly to Figure 1, there is shown a film storing sheet 1 formed by a single transparent plastic sheet. The film storing sheet 1 is formed with a plurality of film storing sections 2 which are arranged in rows and columns. Each of the storing sections 2 has a planar, rectangular bottom 3. Along the upper and lower edge portions of the bottom 3, there are formed laterally extending ridges 4 which are raised from the plane of the bottom 3.

Between each two adjacent rows of the film storing sections 2, there is formed a longitudinally extending ridge 5 which crosses the laterally extending ridges 4. It should therefore be understood that the laterally extending ridges 4 and the longitudinally extending ridges 5 define the film storing sections 2.

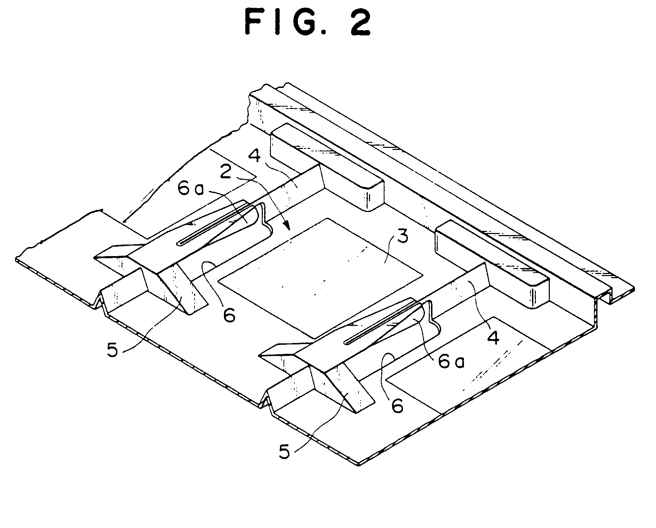

Referring to Figure 2, it will be noted that the laterally extending ridge 4 has a side portion which is cut for a certain distance to provide a cutout portion 6. A laterally inwardly extending tab 6a is formed at the cutout portion 6 to provide a film retainer. A film with a film mount such as a film slide 7 is slipped into the film storing section 2 by having edge portions of the mount of the films slide 7 engaged with the cutout portion 6 of the ridge 4 as shown in Figure 1. The film slide 7 is then retained by the film retainer provided by the tab 6a on the ridge 4. The film storing sheet 1 has a longitudinal edge portion la which is formed with a series of apertures 8 which are arranged in a straight row for binding the sheet 1 in a binder.

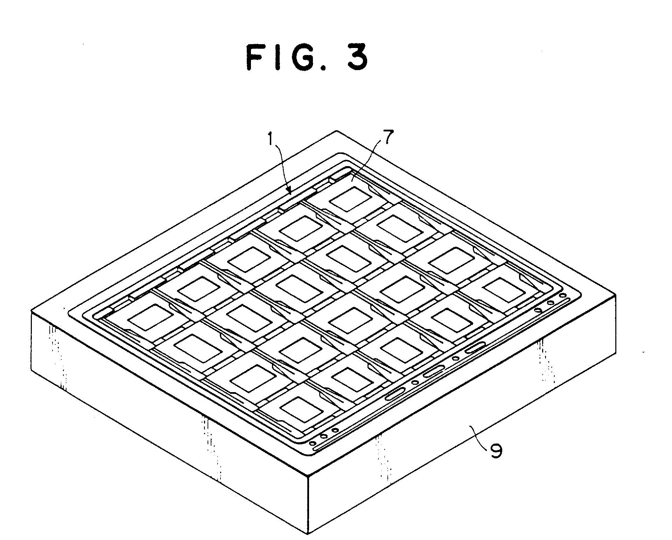

The film storing sheet 1 is opaquely colored at the peripheral portions of the film storing sections 2 by coating with an opaque coloring agent except the rectangular bottom 3 as clearly shown in Figure 1. In Figure 1, it will be noted that the rectangular portion in the bottom 3 which is not coated by the coloring agent and therefore left transparent is smaller than the size of the mount of the film slide 7 but larger than the image area of the film in the film slide 7. Referring to Figure 3, the film storing sheet 1 is shown as being placed on a light box type projector 9. The projector 9 has a light source (not shown) and a platen or a diffusion plate located over the light source. The films on the film slides 7 carried by the film storing sheet 1 are illuminated by the light from the projector 9 so that the images on all of the films can be visually observed at the same time. The film storing sheet 1 of this embodiment is opaquely colored except the rectangular areas in the bottom 3, there will be no leakage of light through the areas between adjacent film slides 7. Therefore, visibility of the images on the films in the film slides 7 will not be disturbed by the light which may otherwise leak through the peripheral portion of the film storing section 2.

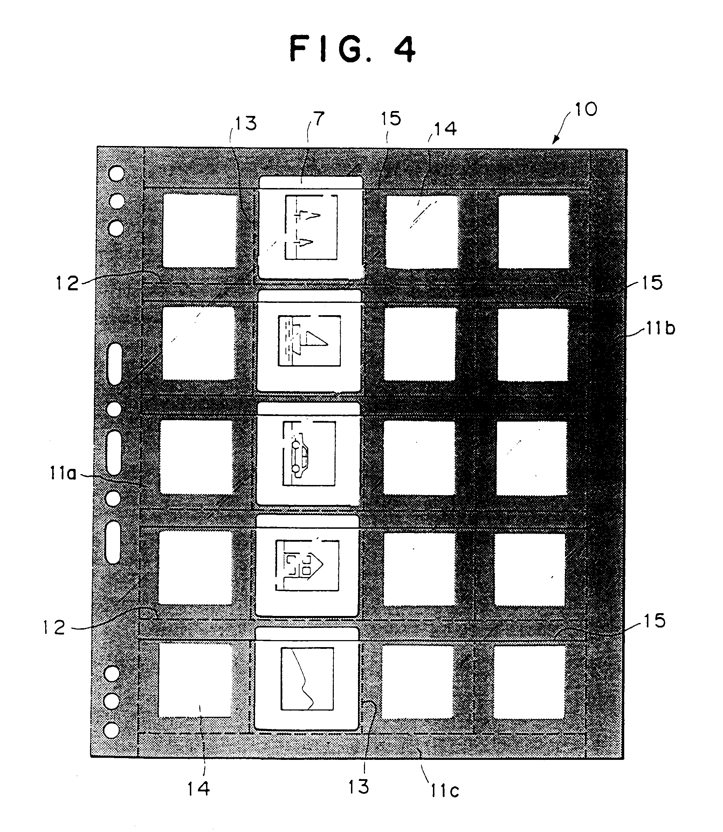

Referring to Figure 4, there is shown a film storing sheet 10 made of two transparent plastic sheets which are laid one over the other and sealed together at three peripheral edge portions 11a, 11b and 11c. The plastic sheets are further sealed together along lattice-like sealing lines 12 and 13. The sealing line 12 extends laterally while the sealing line 13 extends longitudinally. The sealing lines 12 and 13 define a plurality of film storing sections 14.

One of the plastic sheets forming the film storing sheet 10 is formed with laterally extending cuts 15 along respective upper edge portions of the film storing sections 14 for allowing film slides 7 to be inserted into the storing sections 14. One of the plastic sheets is opaquely colored in a lattice-shaped area leaving rectangular areas in the respective film storing sections 14 transparent. The rectangular transparent area in the film storing section 14 corresponds to the image area on the film of the film slide 7 which is stored in the section 14. The rectangular transparent area is smaller than the size of the mount of the film slide 7 but larger than the image area of the film on the film slide 7. It will therefore be understood that it is possible to observe the images on the film of the film slides 7 in the film storing sheet 10 by placing the film storing sheet 10 on the projector 9 which is shown in Figure 3. The visibility of the images will not be disturbed by the light which may otherwise leak through the peripheral portions of the film storing sections 14.

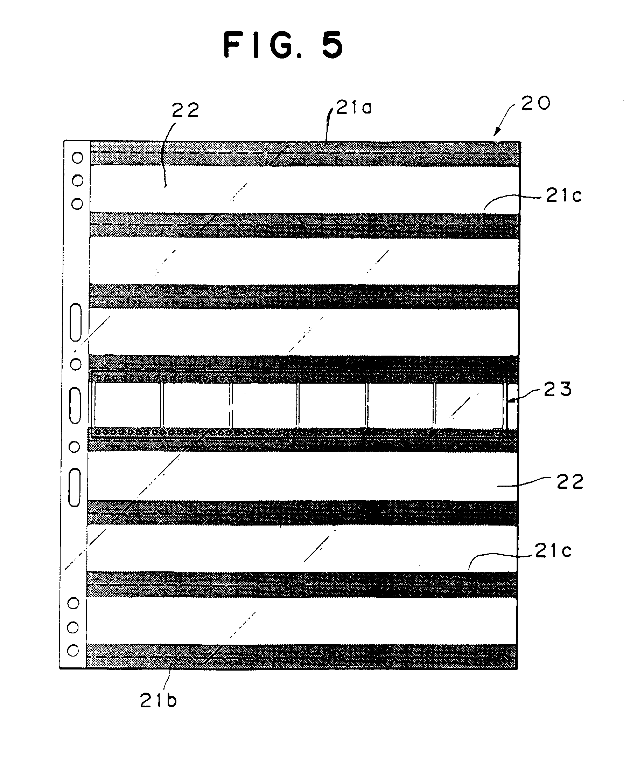

Referring to Figure 5, there is shown a modification of the film storing sheet shown in Figure 4. In this modification, the film storing sheet 20 is designed for storing an elongate film 23 which has a plurality of-image carrying frames. The film storing sheet 20 is formed by two superimposed transparent plastic sheets which are sealed together along an upper edge portion 21a and a lower edge portion 21b. Further, the plastic sheets are also sealed together along lateral sealing lines 21c between the upper and lower sealing lines 21a and 21b. A plurality of film storing sections 22 are thus defined between the sealing lines. The film 23 is inserted into each of the film storing section 22 in the lateral direction as shown in Figure 5. One of the transparent plastic sheets forming the film storing sheet 20 is opaquely coated in areas along the sealing lines 21a, 21b and 21c.

In the embodiment shown in Figure 1 wherein the opaque coating is made in a lattice-shaped pattern, it may not be easy to finish the coating with a good appearance. This may particularly be true at corner portions.

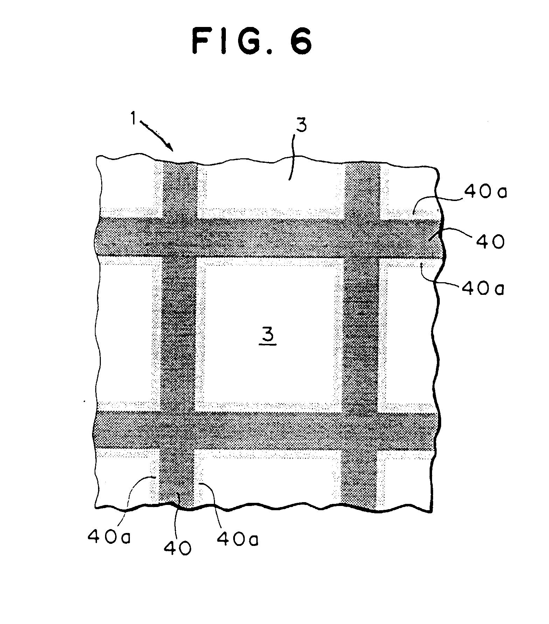

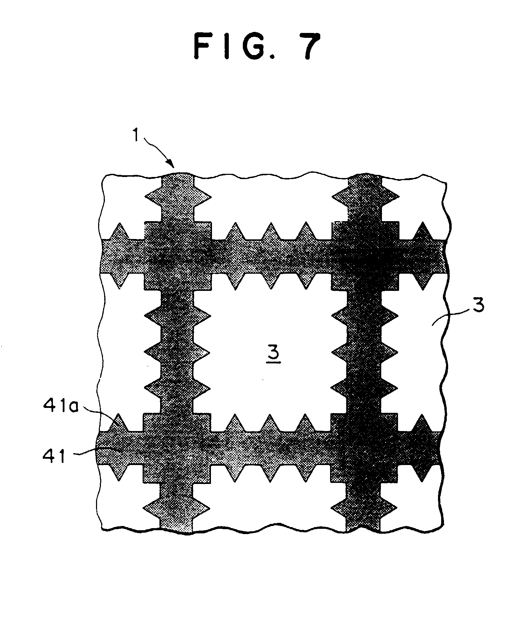

Thus, in accordance with the invention, the coating pattern may be such that the color in the edge portion 40a of the pattern 40 is faded toward the extreme edge as shown in Figure 6 or the edge portion 41 has a zig-zag pattern 41a as shown in Figure 7.

## Claims

1. A film storing sheet (1,10,20) made of a transparent material for storing image carrying films, the film storing sheet comprising a plurality of film storing sections (2,14,22) arranged in a plane, each of the film storing sections having a transparent area (3) in a position corresponding to an image area of the film to be stored in the film storing section so that images on the films stored in the film storing sections can be observed under light which has passed through the transparent areas, and the film storing sheet being opaquely coloured at peripheral portions of the film storing sections to prevent a bright light from passing through; characterised in that for all transparent areas, edge portions of the opaquely coloured peripheral portions, adjacent to the edges of the respective transparent areas, have the colour fading (40a) towards the corresponding edges of said transparent areas, or have a zig-zag edge pattern (41a).

2. A film storing sheet according to claim 1, wherein the film storing sections (2,14) are arranged in rows and columns, and the opaquely coloured peripheral portions are in a lattice-like pattern.

3. A film storing sheet according to any one of the preceding claims, comprising a pair of transparent sheets which are laid one over the other and sealed together at three peripheral edge portions (11a, 11b, 11c), the transparent sheets being also sealed together in intermediate portions along spaced lines (12,13) which are parallel with at least one of the peripheral edge portions to define said plurality of the film storing sections (14), one of the transparent sheets having cuts (15) for defining openings for insertion of the films into the storing sections, at least one of the transparent sheets being opaquely coloured at portions between the storing sections to provide the opaquely coloured peripheral portions.

4. A film storing sheet according to claim 1 including a plurality of film storing sections (22) arranged in parallel relationship for storing elongate films each having a plurality of image areas.

5. A film storing sheet according to claim 4, comprising a pair of transparent sheets which are laid one over the other and sealed together at two opposite peripheral edge portions (21a, 21b), the transparent sheets being also sealed together in intermediate portions along spaced lines (21c) which are parallel with the two opposite peripheral edge portions to define a plurality of film storing sections (22) for storing said elongate films, each of the film storing sections being open at least at one end to allow the elongate film to be inserted into the storing section and at least one of the transparent sheets being opaquely coloured at portions between the storing sections to provide the opaquely coloured peripheral portions.

## Patentansprüche

1. Filmaufbewahrungsblatt (1, 10, 20), das aus einem durchsichtigen Material zum Aufbewahren von Bilder tragenden Filmen hergestellt ist, wobei das Filmaufbewahrungsblatt eine Vielzahl von Filmaufbewahrungsabschnitten (2, 14, 22) umfaßt, die in einer Ebene angeordnet sind, wobei jeder der Filmaufbewahrungsabschnitte einen transparenten Bereich (3) in einer Lage besitzt, die einem Bildbereich des in dem Filmaufbewahrungsabschnitt aufzubewahrenden Films entspricht, so daß die Bilder auf dem in den Filmaufbewahrungsabschnitten aufbewahrten Filmen bei Licht betrachtet werden können, das durch die transparenten Bereiche hindurchgetreten ist, und wobei das Filmaufbewahrungsblatt an Randabschnitten der Filmaufbewahrungsabschnitte lichtundurchlässig eingefärbt ist, um zu verhindern, daß ein helles Licht dort hindurchgelassen wird, dadurch gekennzeichnet, daß bei allen transparenten Bereichen die Kantenabschnitte der lichtundurchlässig eingefärbten Randabschnitte nahe bei den Kanten der jeweiligen transparenten Bereiche eine Farbe besitzen, die in Richtung auf die entsprechenden Kanten der transparenten Bereiche hin verblaßt (40a), oder diese ein Zickzack-Kantenmuster (41a) aufweisen.

2. Filmaufbewahrungsblatt nach Anspruch 1, bei dem die Filmaufbewahrungsabschnitte (2, 14) in Reihen und Spalten angeordnet sind und die lichtundurchlässigen Randabschnitte in einem gitterförmigen Muster angeordnet sind.

3. Filmaufbewahrungsblatt nach einem der vorhergehenden Ansprüche, mit einem Paar von durchsichtigen Folien, die übereinandergelegt und an drei umfangsseitigen Kantenabschnitten (11a, 11b, 11c) miteinander verschmolzen sind, wobei die transparenten Folien auch an dazwischengelegenen Abschnitten entlang beabstandeter Linien (12, 13) miteinander versiegelt sind, die zu zumindest einem der umfangsseitigen Kantenabschnitte parallel sind, um die Vielzahl der Filmaufbewahrungsabschnitte (14) zu bilden, wobei eine der durchsichtigen Folien Einschnitte (15) aufweist, um Öffnungen zum Einführen der Filme in die Aufbewahrungsabschnitte zu bilden, wobei mindestens eine der transparenten Folien an Abschnitten zwischen den Aufbewahrungsabschnitten lichtundurchlässig eingefärbt ist, um die lichtundurchlässig gefärbten Randabschnitte vorzusehen.

4. Filmaufbewahrungsblatt nach Anspruch 1, umfassend eine Vielzahl von Filmaufbewahrungsabschnitten (22), die in einer parallelen Beziehung zueinander angeordnet sind, damit längliche Filme, die jeweils eine Vielzahl von Bildbereichen aufweisen, aufbewahrt werden können.

5. Filmaufbewahrungsblatt nach Anspruch 4, mit einem Paar von transparenten Folien, die übereinandergelegt und miteinander an zwei entgegengesetzten umfangsseitigen Kantenabschnitten (21a, 21b) versiegelt sind, wobei die durchsichtigen Folien miteinander auch an dazwischengelegenen Abschnitten entlang beabstandeter Linien (21c) verschmolzen sind, die parallel zu den beiden gegenüberliegenden umfangsseitigen Kantenabschnitten sind, um eine Vielzahl von Filmaufbewahrungsabschnitten (22) zum Aufbewahren der länglichen Filme zu bilden, wobei jeder der Filmaufbewahrungsabschnitte mindestens an einem Ende offen ist, um es zu erlauben, daß der längliche Film in den Aufbewahrungsabschnitt eingeführt werden kann, und wobei mindestens eine der durchsichtigen Folien an Abschnitten zwischen den Aufbewahrungsabschnitten lichtundurchlässig eingefärbt ist, um die lichtundurchlässig gefärbten Randabschnitte vorzusehen.

## Revendications

1. Feuille de rangement de pellicules (1, 10, 20) réalisée en un matériau transparent, pour ranger des pellicules portant des images, la feuille de rangement de pellicules comprenant plusieurs sections de rangement de pellicule (2, 14, 22) agencées dans un plan, chacune des sections de rangement de pellicule présentant une région transparente (3) dans une position qui correspond à une région d'image du pellicule à ranger dans la section de rangement de pellicule, de telle sorte que des images présentes sur les pellicules rangés dans les sections de rangement de pellicule peuvent être observées à la lumière qui a traversé les régions transparentes, et la feuille de rangement de pellicules étant de couleur opaque sur des parties périphériques des sections de rangement de pellicule, pour empêcher qu'une lumière brillante les traverse; caractérisée en ce que pour toutes les régions transparentes, des parties de bordure des parties périphériques de couleur opaque, adjacentes aux bordures des régions transparentes correspondantes, présentent un dégradé (40a) de couleur en direction des bordures correspondantes desdites régions transparentes, ou présentent un motif de bordure en zigzag (41a).

2. Feuille de rangement de pellicules selon la revendication 1, dans laquelle les sections de rangement de pellicule (2, 14) sont agencées en rangs et en colonnes, et les parties périphériques de couleur opaque sont agencées suivant un motif en treillis.

3. Feuille de rangement de pellicules selon l'une quelconque des revendications précédentes, comprenant une paire de feuilles transparentes qui sont posées l'une au-dessus de l'autre et scellées ensemble sur trois parties de bordure périphérique (11a, 11b, 11c), les feuilles transparentes étant également scellées ensemble dans des parties intermédiaires, le long de lignes espacées (12, 13) qui sont parallèles à au moins l'une des parties de bordure périphérique, pour définir lesdites plusieurs sections de rangement de pellicule (14), l'une des feuilles transparentes présentant des découpes (15) en vue de définir des ouvertures pour l'insertion des pellicules dans les sections de rangement, au moins l'une des feuilles transparentes étant de couleur opaque dans des parties situées entre les sections de rangement, pour fournir les parties périphériques de couleur opaque.

4. Feuille de rangement de pellicules selon la revendication 1, comprenant plusieurs sections de rangement de pellicule (22) agencées parallèlement, pour ranger des pellicules allongés qui présentent chacun plusieurs régions d'image.

5. Feuille de rangement de pellicules selon la revendication 4, comprenant une paire de feuilles transparentes qui sont posées l'une au-dessus de l'autre et scellées ensemble sur deux parties de bordure périphérique opposées (21a, 21b), les feuilles transparentes étant également scellées ensemble dans des parties intermédiaires le long de lignes espacées (21c) qui sont parallèles aux deux parties de bordure périphérique opposées, pour définir plusieurs sections de rangement de pellicule (22) pour ranger lesdits pellicules allongés, chacune desdites sections de rangement de pellicule étant ouverte à au moins une extrémité pour permettre l'insertion du pellicule allongé dans la section de rangement, et au moins l'une des feuilles transparentes étant de couleur opaque dans des parties situées entre les sections de rangement, pour fournir les parties périphériques de couleur opaque.
